# EUROPÄISCHE PATENTSCHRIFT

(11) **EP 3 877 351 B1**
(45) Veröffentlichungstag und Bekanntmachung des Hinweises auf die Patenterteilung: **05.06.2024**
(21) Anmeldenummer: 19801509.1
(22) Anmeldetag: 05.11.2019
(51) Int. Cl.: C04B 28/02, C04B 28/32

(54) **VERWENDUNG VON MINERALSCHAUM ZUR HALDENABDECKUNG**
USE OF MINERAL FOAM FOR COVERING HEAPS
UTILISATION DE MOUSSE MINÉRALE POUR LE RECOUVREMENT DE DÉCHARGES

(30) Priorität: 06.11.2018 DE 102018008701
(43) Veröffentlichungstag der Anmeldung: 15.09.2021
(73) Patentinhaber: K+S Aktiengesellschaft, 34131 Kassel (DE)
(72) Erfinder: WALDMANN, Ludger, 48291 Telgte (DE); LOGEMANN, Lutz, 34260 Kaufungen (DE)
(74) Vertreter: Meissner Bolte Partnerschaft mbB
(86) Internationale Anmeldenummer: PCT/EP2019/080158
(87) Internationale Veröffentlichungsnummer: WO 2020/094598

(56) Entgegenhaltungen:
- DE-C1- 3 925 953
- US-A- 5 556 033
- US-A- 5 696 174

## Beschreibung

Die vorliegende Erfindung betrifft die Verwendung von in Gegenwart von Wasser abbindendem Mineralschaum zur Abdeckung der Oberflächen von Halden, insbesondere bei Rückstandssalzhalden des Bergbaus, z.B. des Kalibergbaus, in einer Gesamtschichtdicke von wenigstens 0,2 m, wobei der Mineralschaum eine Rohdichte im Bereich von 0,2 bis 2,0 kg/L aufweist. Zusätzlich betrifft die Erfindung ein entsprechendes Verfahren zur Abdeckung von Haldenoberflächen mit einem solchen Mineralschaum.

Die Abdeckung von Halden, wie etwa Müllhalden, Abraumhalden oder Halden aus Rückständen von Bergwerken, Hüttenwerken oder anderen Industrien, insbesondere Rückstandssalzhalden der Kaliindustrie, ist besonders zum Schutz gegen Witterungseinflüsse gefordert. So kann es bei Niederschlag zur Auslaugung des Haldenkörpers und in der Folge zur Verunreinigung von Gewässern und des Grundwassers durch Salze kommen. Diese Situation besteht insbesondere bei Rückstandssalzhalden, z.B. solche des Kalibergbaus, da die Halden sehr groß sind, typischerweise steile Flanken aufweisen und zudem große Mengen löslicher Bestandteile enthalten, die leicht ausgewaschen werden. Andererseits können ausgetrocknete Haldenoberflächen bei Wind zur Staubbelästigung und Staubkontamination in der Umgebung führen.

Um Halden vor den genannten Witterungseinwirkungen zu schützen, werden sie beispielsweise mit Folien oder Planen aus Kunststoff abgedeckt. Dies kann jedoch aufgrund der lokalen Gegebenheiten insbesondere bei Kalirückstandshalden, zum Beispiel aufgrund der Steilheit der Flanken und enormen Flankenlänge, nicht mehr möglich sein. Daneben sind mehrere Verfahren bekannt, bei denen die Haldenoberfläche durch Behandeln mit einem abbindenden Material auf mineralischer oder organischer Basis mit einer versiegelnden Schicht überzogen wird. Solche Verfahren werden zum Beispiel in DE 3925953, DE 4117270, DE 19937270, DE 19632154, DE 102009033833 und WO 2011/147403 beschrieben.

Diese Verfahren des Standes der Technik sind allerdings mit Nachteilen behaftet. Insbesondere fällt bei den damit abgedeckten Halden schnell viel Haldenwasser an, sobald die Halde stärkerem Niederschlag ausgesetzt ist. Das Niederschlagswasser fließt dabei weitgehend vollständig und ungehindert an den meist steilen Haldenflanken ab und vereinigt sich an der Basis der Halde zu oftmals größeren Mengen an strömendem Haldenwasser. Um solchen Wassermengen geordnet ableiten zu können, sind entsprechend dimensionierte Gräben, Auffangbecken und Ableitungen notwendig. Da das Haldenwasser häufig zum Beispiel salzbelastet ist, entstehen außerdem Kosten für Entsorgung bzw. Aufarbeitung, die proportional zur Wassermenge sind.

Der vorliegenden Erfindung liegt somit die Aufgabe zugrunde, ein Verfahren zur Abdeckung von Haldenoberflächen bereitzustellen, welches diese Nachteile der Verfahren des Standes der Technik vermeidet. So soll das Verfahren zu einer möglichst standsicheren Versiegelung des Haldenkörpers führen, welche die Halde nicht nur vor Witterungseinflüssen schützt, sondern auch die sich bei Niederschlag ansammelnde Menge an Haldenwasser deutlich reduziert.

Es wurde überraschenderweise gefunden, dass diese und weitere Aufgaben durch die Verwendung von in Gegenwart von Wasser abbindendem Mineralschäumen zur Haldenabdeckung gelöst werden.

Dementsprechend betrifft die vorliegende Erfindung die Verwendung von in Gegenwart von Wasser abbindendem Mineralschaum zum Abdeckung der Oberflächen von Halden, wie insbesondere von Rückstandssalzhalden des Bergbaus, in einer Gesamtschichtdicke von wenigstens 0,2 m, wobei der Mineralschaum eine Rohdichte im Bereich von 0,2 bis 2,0 kg/L aufweist, sowie ein Verfahren zur Abdeckung der Oberfläche einer Halde umfassend das Aufbringen einer Schicht eines solchen Mineralschaums der eine Rohdichte im Bereich von 0,2 bis 2,0 kg/L aufweist, in einer Gesamtschichtdicke von wenigstens 0,2 m, auf der Haldenoberfläche.

Die erfindungsgemäß eingesetzten Mineralschäume zeichnen sich gegenüber den im Stand der Technik eingesetzten Materialien durch eine Reihe von Vorteilen aus. So gewährleistet der Mineralschaum im abgebundenen Zustand nicht nur eine standsichere Versiegelung gegen Witterungseinwirkungen sondern zeichnet sich auch durch eine hohe Wasseraufnahme- und Wasserabgabekapazität aus. Daher ist der Mineralschaum in der Lage, Niederschlagswasser zunächst zu speichern, ggf. verzögert abzugeben bzw. durch natürliche Verdunstung wieder in die Atmosphäre abzugeben. Hierdurch wird das anfallende Volumen, bzw. der anfallende Volumenstrom des Haldenwassers deutlich verringert. Diese überraschende Wasseraufnahmefähigkeit der erfindungsgemäßen Mineralschaumabdeckung ist auf seine poröse Beschaffenheit mit hohem offenen Porenvolumen zurückzuführen. Darüber hinaus weisen die erfindungsgemäß eingesetzten Mineralschäume durch ihre offenporige Struktur eine hohe Frost-Tau-Beständigkeit auf. Seine Porosität verleiht dem Mineralschaum zudem eine große Oberfläche, welche die Verdunstung des aufgenommenen Haldenwassers fördert.

Dementsprechend ermöglicht die erfindungsgemäße Abdeckung von Halden eine Auslaugung von wasserlöslichen Verbindungen innerhalb der Halde zu minimieren oder zu verhindern, in dem der verwendete Mineralschaum durch Wasseraufnahme von Niederschlägen und spätere Wasserabgabe durch natürliche Verdunstung die Menge an anfallendem Haldenwasser deutlich reduziert.

Bei dem in Gegenwart von Wasser abbindendem Mineralschaum gemäß der vorliegenden Erfindung handelt es sich um eine in Gegenwart von Wasser abbindende mineralische Substanz, die durch eingelassene Gaskavitäten, wie insbesondere Gasbläschen, aufgeschäumt ist. Als abbindende mineralische Substanz kommt grundsätzlich jedes in Gegenwart von Wasser abbindende anorganisch-mineralische Material in Frage, das sich in einen Schaum überführen lässt. Besonders zu nennen sind hier in Gegenwart von Wasser abbindende anorganische Bindemittel, wie hydraulische Kalke, Gips, Zemente, z.B. Portlandzement, Tonerdezement, Puzzolane und Sorelzement, auch Magnesiabinder genannt, und deren Mischungen sowie insbesondere Mischungen wenigstens eines dieser anorganischen Bindemittel mit ein oder mehreren Zusätzen, wie beispielsweise Füllstoffe und feinteilige Zuschlagstoffe. Bei diesen Zusätzen handelt es sich typischerweise um feinteilige anorganische Substanzen, wie etwa nicht abbindende Mineralien, beispielsweise Wollastonite, Perlit, Talkum, Magnesiumoxid, Kaolin, Metakaolin, Kieselsäure, natürliche und künstliche Zeolithe, Bimsmehl, Flugasche, und deren Gemische sowie Gemische mit feinteiligen organischen Materialien, wie etwa Holzmehl oder Kunststoffmehl. Die zugesetzten Materialien liegen in der Regel in feinteiliger bzw. in feinkörniger Form vor. In der Regel enthalten Mineralschäume einen oder mehrere in Wasser lösliche Bestandteile z.B. Schaumstabilisatoren, Schaumbildner, Abbindeverzögerer, z.B. Zitronensäure und deren Salze oder Betonverflüssiger, z.B. organische Polymere mit Polyethergruppen oder Natrium- oder Kaliumsilikate.

Zur Schaumerzeugung und -stabilisierung enthalten die Mineralschäume typischerweise ein oder mehrere Schaumbildner, wie insbesondere solche auf Protein-, Tensid-oder Enzymbasis. Als tensidbasierte Schaumbildner kann hier eine Palette von kommerziell erhältlichen oberflächenaktiven Substanzen verwendet werden, die Schaumbildung in wässrigen Medien bewirken. Insbesondere geeignet sind Alkalimetallsalze organischer Sulfonsäuren wie Alkylsulfate, Schwefelsäurehalbester von ethoxylierten Alkanolen und Alkylbenzolsulfonsäuren, sowie deren Gemische mit nichtionischen Emulgatoren wie ethoxylierte Alkylphenole oder ethoxylierte Alkanole. Derartige oberflächenaktive Substanzen werden häufig mit Schaumstabilisatoren, beispielsweise Zucker, Oligosaccharide, Polyvinylalkohol oder dergleichen eingesetzt.

Als proteinbasierte Schaumbildner können sowohl pflanzliche als auch tierische Proteine und Proteinmischungen eingesetzt werden, die in der Lage sind einen stabilen Schaum zu bilden. Auch sind modifizierte Proteinmischungen wie Fluorproteinschaummittel, filmbildende Fluor-Protein-Schäume oder sogenannte AFFF (aqueous film forming foams), also wasserfilmbildende Schaummittel, die auf unpolaren Flüssigkeiten einen gasdichten wässrigen Film ausbreiten können, als Schaumbildner einsetzbar.

Enzymbasierte Schaumbildner sind biotechnologischen Ursprungs und z.B. durch Hydrolase modifizierte Proteinschaummittel oder biotechnologisch hergestellte Proteinschaummittel, wie etwa das Produkt LithoFoam^{®} der Firma Luca Industries International.

Vorzugsweise weist der verwendete in Gegenwart von Wasser abbindende Mineralschaum einen Porengehalt im Bereich von 10 bis 95 Vol.-%, insbesondere von 50 bis 90 Vol.-% auf, d.h. das Gesamtvolumen des Mineralschaums besteht zu 10 bis 95 %, bzw. 50 bis 90 %, aus Gas, vorzugsweise Luft, in Form von Kavitäten, wie insbesondere Bläschen.

Es ist erfindungsgemäß dass der erfindungsgemäß verwendete Mineralschaum, der in der Gegenwart von Wasser abbindet eine Rohdichte im Bereich von 0,2 bis 2,0 kg/L, insbesondere 0,2 bis 1,0 kg/L hat. Unter der Rohdichte versteht man die Dichte des Mineralschaums im nicht abgebundenen Zustand, die in an sich bekannter Weise durch Bestimmung der Masse eines definierten Volumens des Mineralschaums bestimmt werden kann.

Der in Gegenwart von Wasser abbindende Mineralschaum ist im nicht abgebundenen Zustand eine fließfähige Masse, die zu einem festen Mineralschaum abhärtet, der vorzugsweise offenporig ist. Der Begriff offenporig ist so zu verstehen, dass die überwiegende Zahl der Poren im abgebundenen Mineralschaum, die beim Abbinden aus den Bläschen des noch nicht abgebundenen Mineralschaums entstehen, nicht vollständig von den mineralischen Bestandteilen des Mineralschaums umschlossen sind und auf diese Weise in der Mineralschaumschicht ein Netzwerk von Hohlräumen bilden. An der Oberfläche der Schicht aus dem abgebundenen Mineralschaums befinden sich daher eine Vielzahl offener Poren bzw. Hohlräume, die überwiegend mit den tiefer liegenden Hohlräumen/Poren verbunden sind, sodass auch tiefere Bereiche der haldenabdeckenden Mineralschaumschicht für Gase oder Flüssigkeiten zugänglich sind. Dieses Netzwerk an kommunizierenden Poren bzw. Hohlräumen ist für die zuvor erwähnten schwammartigen Eigenschaften des abgebundenen Mineralschaums verantwortlich. Mineralschäume und deren Herstellung sind bekannt, z.B. aus der WO 2015/069990, US 2018022653, US 2017190630, CN104446641 und DE 102011109520 sowie aus dem in den vorgenannten Schriften zitierten Dokumenten.

Die Herstellung kann grundsätzlich auf drei unterschiedliche Arten und Weisen erfolgen. Häufig wird man eine wässrige Lösung oder Suspension des in Gegenwart von Wasser abbindenden anorganische Bindemittels, die typischerweise zusätzlich ein oder mehreren Zusätzen, wie beispielsweise Füllstoffe und feinteilige Zuschlagstoffe und gegebenenfalls ein oder mehrere weitere Additive wie Schaumstabilisatoren, Abbindeverzögerer, und Betonverflüssiger enthält (sogenannte Schlempe) durch Einblasen von Luft in Gegenwart eines Tensids und gegebenenfalls eines Schaumstabilisators in einen Schaum überführen, beispielsweise nach der in WO 2015/069990 oder US 2018022653 beschriebenen Methode. Ebenso ist es möglich, den Schaum durch ein Treibmittel, welches sich beim Einmischen in die Schlempe in gasförmige Bestandteile zersetzt, zu erzeugen. Ein Bespiel für ein solches Treibmittel ist Wasserstoffperoxid, wie z.B. in DE 102011109520 beschrieben. Des Weiteren kann ein Schaumbildner, wie etwa ein tensid- oder proteinbasierter Schaumbildner, mit Wasser und Luft in einem Schaumgenerator zur Schaumbildung gebracht und dann in einem Mischer mit der Schlempe vermengt werden, z.B. in Analogie zu dem in DE102010062762 beschriebenen Verfahren.

In einer bevorzugten Ausführungsform der vorliegenden Erfindung ist der in Gegenwart von Wasser abbindende Mineralschaum ein Mineralschaum auf Basis von Sorelzement, d.h. bei der in Gegenwart von Wasser abbindenden mineralischen Substanz in dem erfindungsgemäßen Mineralschaum handelt es sich um Sorelzement, der durch Vermischen von Magnesiumoxid (MgO), Magnesiumchlorid (MgCl₂) und Wasser hergestellt wird. Das Magnesiumoxid wird bevorzugt in Form von kaustischem MgO, das auch als kaustisch gebranntes Magnesit bezeichnet wird, verwendet, welches etwa 70 bis 95 Gew.-% MgO, etwa 1 bis 3 Gew.-% Eisenoxid (Fe₂O₃) und in der Regel weitere Oxide wie Calcium- und Siliziumoxid enthält. Zum Vermischen wird üblicherweise kaustisches MgO und eine etwa 15 bis 45 gewichtsprozentige, vorzugsweise etwa 30 bis 35 gewichtsprozentige wässrige Lösung von MgCl₂ eingesetzt.

Die Aufschäumung des Sorelzements kann durch Eintrag von Gas, insbesondere Luft, mittels Düsen in die die wässrige Mischung aus (kaustischem) MgO und MgCl₂ erfolgen, beispielsweise in Analogie zu dem in WO 2015/069990 beschriebenen Verfahren, wobei der Gaseintrag bereits während des Mischens von (kaustischem) MgO, MgCl₂ und Wasser oder erst im Anschluss daran durchgeführt wird.

Alternativ kann die Aufschäumung des Sorelzements bewerkstelligt werden, indem man während des Mischens von (kaustischem) MgO, MgCl₂ und Wasser oder erst im Anschluss daran ein Treibmittel einträgt, das Gas freisetzt. Als Treibmittel eignet sich insbesondere Wasserstoffperoxid, das vorzugsweise als wässrige Lösung mit einer Wasserstoffperoxidkonzentration von typischerweise 30 bis 40 Gew.-% verwendet wird. Es ist zudem bevorzugt, zunächst eine homogene oder weitgehend homogene wässrige MgO/MgCl₂-Mischung herzustellen und diese dann mit der wässrigen Treibmittellösung zu vermischen. Ein entsprechendes Verfahren zur Herstellung von auf Sorelzement basiertem Mineralschaum ist in der DE 102011109520 beschrieben, auf die hier vollumfänglich verwiesen wird. Bei der Verwendung von kaustischem MgO beschleunigt das darin enthaltene Fe₂O₃ die Zersetzung von Wasserstoffperoxid in Wasser und dem Treibmittel Sauerstoff. Sollte stattdessen MgO ohne nennenswerte Fe₂O₃-Anteile verwendet werden, empfiehlt sich die Zugabe eines Beschleunigungszusatzes wie beispielsweise Braunstein oder Permanganat.

Um die Schaumbildung in dem nicht abgebundenen Sorelzement, der üblicherweise in Form einer flüssigen bis dickflüssigen wässrigen Suspension vorliegt, zu verbessern oder überhaupt zu ermöglichen, wird ihm bei der Herstellung des Mineralschaums vorzugsweise ein Tensid zugemischt und gegebenenfalls ein Schaumstabilisator.

Weiterhin kann, in Anlehnung an die in DE 102010062762B4 oder in CN104446641 das Aufschäumen eines Sorelzements durch Vermischen eines stabilen, separat hergestellten Schaums mit einer Sorelzementschlempe erreicht werden.

Der beschriebene in Gegenwart von Wasser abbindende Mineralschaum auf Basis von Sorelzement weist eine Rohdichte im Bereich von 0,2 bis 2,0 kg/L, insbesondere im Bereich von 0,2 bis 1,0 kg/L auf.

In einer weiteren bevorzugten Ausführungsform der vorliegenden Erfindung ist der in Gegenwart von Wasser abbindende Mineralschaum ein nicht abgebundener Schaumbeton. Bei dem nicht abgebundenen Schaumbeton kann es sich im Prinzip um jede aus dem Stand der Technik bekannte Betonrezeptur handeln, die sich in eine aufgeschäumte wässrige Suspension überführen lässt. Eine solche Betonrezeptur enthält typsicherweise einen Zement als hydraulisch abbindende Substanz, beispielsweise Trass- und Portlandzement, sowie gegebenenfalls einen oder mehrere der vorgenannten Zuschlagsstoffe, die typischerweise in feinteiliger Form eingesetzt werden, sowie gegebenenfalls einen oder mehrere sonstige Betonzusatzstoffe, beispielsweise organo-chemische Stoffe, wie etwa Kunstharze und Pigmente, weiterhin Fließmittel, Betonverflüssiger, Luftporenbildner, Erstarrungsbeschleuniger und -verzögerer.

Das Aufschäumen der wässrigen Beton-Suspension (im Folgenden auch Betonschlempe genannt) kann mit den Verfahren erfolgen, die im Zusammenhang mit der Herstellung des Mineralschaums auf Basis von Sorelzement erläutert wurden, d.h. insbesondere durch Gaseintrag mittels Düsen in Analogie zur WO 2015/069990, US 2018022653, US 2017190630, durch Zumischen eines Treibmittels, beispielsweise Wasserstoffperoxid oder Aluminiumpulver, wie in DE 102011109520 bzw.

DE 102006045091B4 beschrieben, oder durch Vermischen eines stabilen, separat hergestellten Schaums mit der Betonschlempe. Häufig lässt sich auch hier eine verbesserte Schaumbildung dadurch erzielten, indem man sie, wie zuvor beschrieben, in Gegenwart eines Tensids durchführt. Dies trifft zumindest dann zu, wenn die Aufschäumung durch Gaseintrag mittels Düsen, Zumischen von Wasserstoffperoxid als Treibmittel oder Vermischen der Schlempe mit einem vorgefertigtem Schaum erfolgt.

Der beschriebene in Gegenwart von Wasser abbindende Schaumbeton weist Rohdichte im Bereich von 0,2 bis 2,0 kg/L, insbesondere im Bereich von 0,2 bis 1,0 kg/L auf.

Die Erfindung betrifft auch ein Verfahren zur Abdeckung der Oberflächen von Halden, insbesondere von Rückstandssalzhalden, welches die Bereitstellung eines erfindungsgemäßen in Gegenwart von Wasser abbindenden Mineralschaums und Aufbringen wenigstens einer Schicht eines solchen noch nicht abgebundenen Mineralschaums auf die abzudeckenden Oberflächen der Halde umfasst.

Bei dem in dem Verfahren verwendeten nicht abgebundenen Mineralschaum handelt es sich vorzugsweise um einen Mineralschaum auf Basis von Sorelzement oder einen Schaumbeton, wie sie zuvor beschrieben wurden.

Die Bereitstellung dieser nicht abgebundenen Mineralschäume kann mittels der vorgenannten Verfahren erfolgen. Solche Mineralschaum-Suspensionen, bzw. nicht abgebundenen Mineralschäume sind aufgrund ihrer typischerweise flüssigen bis dickflüssigen Konsistenz gut weiterzuverarbeiten, da sie insbesondere pump-, sprüh- und streichfähig sind und so leicht in eine gewünschte Form gebracht werden können. Dementsprechend eignen sie sich insbesondere dazu, schichtweise auf Haldenoberflächen aufgetragen zu werden und bei Bedarf eine Modellierung der Oberfläche erfolgen kann.

Eine solche Auftragung kann beispielsweise dadurch erfolgen, dass der nicht abgebundene Mineralschaum zunächst mittels Pumpe und einem flexiblen Schlauch auf der Haldenoberfläche vorverteilt und dann mit Hilfe eines entsprechenden Werkzeugs, wie etwa einem Abstreichholz oder einer Walze, in die Form einer die Haldenoberfläche abdeckenden Schicht gebracht wird, wobei die Schicht in unmittelbaren Kontakt mit der Haldenoberfläche steht. Alternativ kann der Mineralschaum beispielsweise mittels eines druckluftbetriebenen Sprühgeräts auf die Oberfläche der Halde aufgesprüht werden. Dadurch kann häufig eine besonders gleichmäßige Verteilung und somit die Bildung einer einheitlichen Schicht, die ebenfalls in unmittelbaren Kontakt mit der Haldenoberfläche steht, erreicht werden.

Der noch nicht abgebundene Mineralschaum kann in einer oder mehreren Schichten auf die abzudeckenden Oberflächen der Halde aufgebracht werden, wobei die für das Aufbringen der verschiedenen Schichten eingesetzten Mineralschäume die gleichen Eigenschaften oder unterschiedliche Eigenschaften aufweisen können. Hierbei kann man so vorgehen, dass man eine erste Schicht des noch nicht abgebundene Mineralschaums unmittelbar auf die Haldenoberfläche aufbringt, diese Schicht teilweise oder vollständig aushärten lässt und anschließend wenigstens eine weitere Schicht auf diese erste Schicht aufbringt.

In einer bevorzugten Ausführungsform wird man eine oder mehrere Schichten eines noch nicht abgebundene Mineralschaum auf die abzudeckenden Oberflächen der Halde aufbringen, der so ausgestaltet ist, dass die Mineralschaumschicht(en) im abgebundenen Zustand nur ein geringes Wasseraufnahmevermögen und damit eine geringe Wasserdurchlässigkeit aufweisen. Diese erste(n) Schicht(en) werden im Folgenden auch als untere Schicht bezeichnet. Auf diese wenigstens eine erste Schicht bringt man dann eine oder mehrere weitere Schichten eines noch nicht abgebundene Mineralschaums auf, im Folgenden als ober Schicht bezeichnet. Diese obere Schicht ist vorzugsweise so ausgestaltet, dass sie im abgebundenen Zustand ein höheres Wasseraufnahmevermögen und damit eine höhere Wasserdurchlässigkeit aufweist als die unter Schicht. Ein geringes Wasseraufnahmevermögen und damit eine geringe Wasserdurchlässigkeit des Mineralschaums kann beispielsweise durch eine oder mehrere der folgenden Maßnahmen erreicht werden: Zusatz eines hydrophobierend wirkenden Additivs, z.B. eines Mineralöls oder eines Silikonöls zum Mineralschaum; Verwendung eines Mineralschaums mit einer höheren Dichte bzw. einem geringen Porengehalt; Verwendung eines Mineralschaums mit einem geringen Anteil offener Poren. Umgekehrt kann ein höheres Wasseraufnahmevermögen und damit eine höhere Wasserdurchlässigkeit des Mineralschaums beispielsweise durch eine oder mehrere der folgenden Maßnahmen erreicht werden: Zusatz eines hydrophilierend wirkenden Additivs zum Mineralschaum, z.B. polare organische Polymere; Verwendung eines Mineralschaums mit einer geringen Dichte bzw. einem hohen Porengehalt; Verwendung eines Mineralschaums mit einem hohen Anteil offener Poren. Die Dichte des Mineralschaums, der Porengehalt sowie der Anteil offener Poren können in an sich bekannter Weise durch Art und Menge der Schaumstabilisatoren, Schaumbildner und Abbindeverzögerer sowie durch die Bedingungen bei der Schaumbildung gesteuert werden.

Durch die untere Schicht wird eine Abdichtung des Haldenkörpers erzielt und so das Eindringen von Wasser in den Haldenkörper oder einen Wasseraufstieg verhindert oder zumindest signifikant verringert. Durch die obere Schicht wird gewährleistet, dass die Mineralschaumschicht Niederschlagswasser speichern und wieder abgeben kann, beispielsweise als Wasserdampf. Hierdurch wird die Begrünung der Halde erleichtert, die durch aktive Maßnahmen wie Einsaat, Düngung und Bewässerung gefördert werden kann. Außerdem wird auf diese Weise erreicht, dass nicht verdampftes Niederschlagswasser über die obere Schicht und oberhalb der unteren Schicht entlang der Haldenflanke abgeleitet wird, z.B. in einen die Halde umgebenden Haldengraben oder in ein sonstiges Drainagesystem. Auf diese Weise wird der Wasserdruck auf die untere Schicht verringert und ein Eindringen des Wassers in den Haldenkörper zusätzlich erschwert.

Der in Gegenwart von Wasser abbindende Mineralschaum wird in einer Gesamtschichtdicke von wenigstens 0,2 m, z.B. in einer Gesamtschichtdicke im Mittel von 0,2 bis 2,0 m auf die abzudeckenden Oberflächen der Halde aufgebracht.

Der nicht abgebundene Mineralschaum, bzw. die Mineralschaum-Suspension, kann während des Auftragens auf die Haldenoberfläche oder nach dem Auftragen, solange die aufgetragene Schicht noch formbar ist, modelliert werden. Durch die Modellierung wird die Oberfläche der Beschichtung derart geformt, dass sie nach dem Abhärten in der Lage ist, Niederschlagswasser aufzufangen oder seinen Abfließen zu verlangsamen. Bei diesen auf der Oberfläche aufgebrachten Formen handelt es sich insbesondere um Vertiefungen und Terrassen, in denen Niederschlagswasser zurückgehalten und gesammelt werden kann, als auch Rinnen mit geringer Neigung, die den Abfluss des Wassers abbremsen und gegebenenfalls kanalisieren. Die Modellierung kann in an sich bekannter Weise mittels geeigneter Werkzeuge erfolgen.

Im Anschluss an das Aufbringen des in Gegenwart von Wasser abbindenden Mineralschaums lässt man den Schaum abbinden und aushärten, wobei die sich ausbildende feste Mineralschaumschicht mit der Oberfläche des Haldenkörpers verzahnt wird und, in Abhängigkeit von der Beschaffenheit der Oberfläche, auf dieser mehr oder weniger fest anhaftet. Im Falle von Rückstandssalzhalden ist die abgehärtete Mineralschaumschicht in der Regel fest an die Oberfläche gebunden, so dass die erhaltene Abdeckung gegen Abrutschen weitgehend geschützt ist.

Wie zuvor erwähnt, kann es bei Niederschlag zur Auslaugung des Haldenkörpers und in der Folge zur Verunreinigung von Gewässern und des Grundwassers kommen. Eine erfindungsgemäß erhaltene Schicht aus abgebundenem und ausgehärtetem Mineralschaum ist besonders geeignet, Halden gegen solche Einflüsse zu schützen, da sie aufgrund ihrer Wasseraufnahmefähigkeit und gegebenenfalls ihrer Form schnell fließendes Wasser an den Flanken minimiert, welche ansonsten in den Haldenkörper eindringen und danach am Haldenfuß austreten könnte. Das aufgenommene bzw. aufgefangene Niederschlagswasser kann über natürliche Verdunstung wieder an die Atmosphäre abgegeben werden. Daher bringt man gemäß einer speziellen Ausführungsform des erfindungsgemäßen Verfahrens eine Schicht des in Gegenwart von Wasser abbindenden Mineralschaums zumindest auf einen Teil des Flankenbereichs der Halde auf und lässt ihn abbinden, sodass eine ausgehärtete Mineralschaumschicht entsteht, die die genannte Schutzwirkung entfaltet.

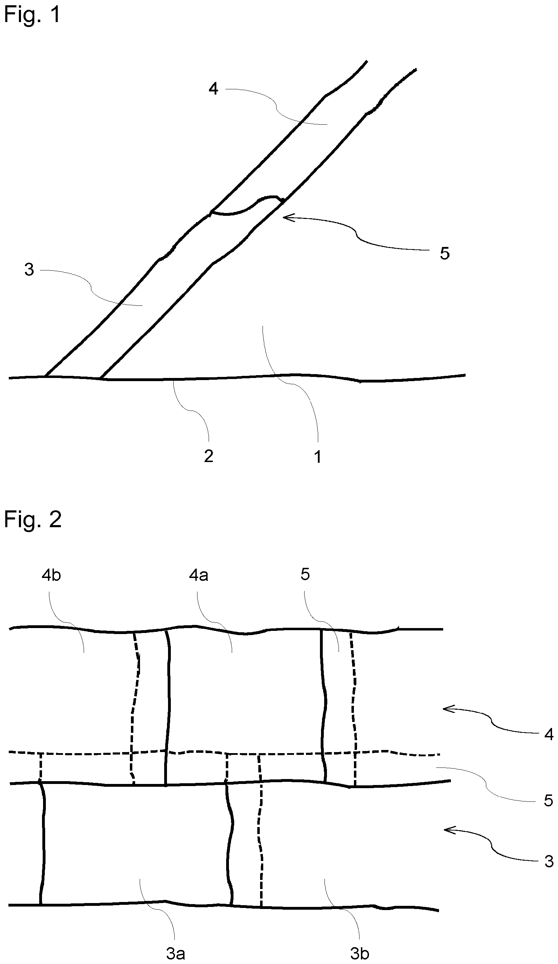

In einer bevorzugten Ausführungsform der Erfindung wird der abzudeckende Bereich der Haldenoberfläche mit einer Abdeckung aus Mineralschaum versehen, indem man den nicht abgebundenen Mineralschaum, hier auch Mineralschaum-Suspension genannt, abschnittsweise aufträgt, bis dieser Bereich vollständig abgedeckt ist. Dabei geht man in der Regel so vor, dass man den abzudeckenden Bereich in Felder unterteilt, die sukzessive mit der Mineralschaum-Suspension beschichtet werden. Die Felder sind vorzugsweise rechteckig, insbesondere quadratisch oder annähernd quadratisch, und haben eine ungefähre Größe im Bereich von 100 bis 800 m², insbesondere von 300 bis 500 m². Es ist bevorzugt, aneinander angrenzende Felder, die beispielsweise in einem Streifen oder einer Lage über die gesamte Länge oder Breite des abzudeckenden Bereichs nebeneinander angeordnet sind, nacheinander zu beschichten. Vorzugsweise lässt man die in einem Feld aufgebrachte Mineralschaum-Suspension zunächst teilweise oder vollständig oder fast vollständig aushärten, bevor das nächste Feld mit der Mineralschaum-Suspension beschichtet wird. Auf diese Weise werden Platten aus gehärtetem Mineralschaum erhalten, die das jeweilige Feld abdecken. Die Mineralschaum-Suspension wird bevorzugt so in einem Feld aufgetragen, dass die gebildete Suspensionsschicht mit einer benachbarten Mineralschaumplatte überlappt, wobei die Gesamtschichtdicke im Überlappungsbereich vorzugsweise in etwa der mittleren Schichtdicke in den übrigen Bereichen entspricht. Dies kann man erreichen, indem beim Beschichten eines Feldes die Suspension im Bereich der Feldränder, die an unbeschichtete Felder angrenzen, mit sich verjüngender Schichtdicke aufgetragen wird. Bei einem angrenzenden Feld mit eine zum Rand verjüngten Beschichtung trägt man die Suspension entsprechend so auf, dass der Verjüngungsbereich überschichtet wird. Eine solche überlappende Auftragung ist beispielhaft in Abbildung 1 gezeigt.

Die überlappenden Mineralschaumplatten einer gemäß der vorgenannten Ausführungsform erhaltenen Haldenabdeckung, haften aufgrund der Überlappung fest aneinander. Jedoch stellen die überlappenden Kantenbereiche Sollbruchstellen dar. Wenn im Laufe der Zeit Kräfte auf die Platten einwirken, die zu einer Relativbewegung der Platten führen, beispielsweise als Folge von Verformungen oder durch ein Ausspülen oder ein Setzen des Haldenkörpers, wird die Abdeckung vorzugsweise nur in den Überlappungsbereichen beschädigt und ein unkontrolliertes Reißen in den Plattenbereichen wird verringert. Die sich hierbei bildenden Beschädigungen, typischerweise Risse an den Nahtstellen der Platten, lassen sich durch erneuten Eintrag der erfindungsgemäßen Mineralschaum-Suspension und anschließendem Aushärten wieder leicht verschließen.

Beispielsweise kann man so vorgehen, dass man zunächst den in Gegenwart von Wasser abbindenden Mineralschaum in Form eines horizontal ausgerichteten Streifens, auf den bodennahen Flankenbereich der Halde aufbringt. Der Streifen kann aus mehreren, vorzugsweise in ihren Randbereichen überlappenden Bereichen bestehen, die sukzessive in der oben beschriebenen Weise aufgebracht werden, so dass sich beim Aushärten aneinander angrenzende oder überlappende Platten bilden. Hierbei wird man vorzugsweise so vorgehen, dass Schichtdicke auch zu den oberen Randbereichen des Streifens verjüngt wird. Nach Aushärten des Streifens wird direkt angrenzend oder vorzugsweise überlappend ein weiterer, gegebenenfalls in mehrere Bereiche unterteilter Streifen oberhalb des bereits aufgebrachten Streifens aufgebracht, der seinerseits in den Randbereichen Verjüngungen aufweist. Dieser Vorgang kann ein-oder mehrfach wiederholt werden, bis der gewünschte Bereich der Halde abgedeckt ist. Auf diese Weise entsteht zwischen den einzelnen Streifen jeweils eine schräge Sollbruchkante. Sollte es später zu Formveränderungen, insbesondere vertikalen Formveränderungen, der Halde kommen, werden bei einer derartigen Ausführung der Haldenabdeckung die Sollbruchstellen entlang dieser Solbruchkanten liegen, so dass die einzelnen Streifensegmente gegeneinander gleiten können, ohne dass die Abdeckung zerstört wird. In vergleichbarer Weise kann man auch sukzessive vertikal ausgerichtete Streifen auf den Haldenkörper aufbringen, wobei auch die vertikal ausgerichteten Streifen in einzelne Bereiche unterteilt sein können, dass die einzelnen Bereiche beim aushärten Platten bilden.

Die beschriebene Abdeckung aus sich überlappenden Mineralschaumplatten kann gegebenenfalls zusätzlich stabilisiert werden, indem man die Bindung zwischen den Platten weiter verstärkt. Dies kann dadurch erreicht werden, dass man eventuelle Fugen oder Unebenheiten im Überlappungsbereich mit einem geeignetem Material, insbesondere einem elastischen Material, welches beispielsweise ein mineralisches oder organisches Bindemittel enthält, verfüllt, bzw. diesen Bereich mit einem solchen Material überdeckt.

Gemäß einer weiteren Ausführungsform der Erfindung wird der in Gegenwart von Wasser abbindende Mineralschaum in Kombination mit einer Geotextilie oder einem Geogitter einsetzt. Geotextilien und Geogitter sowie ihre Einsatzmöglichkeiten im Bauwesen sind bekannt. Geotextilien sind typischerweise flächige oder dreidimensionale textile Gewebe oder Vliese, die aus natürlichen Fasern, wie etwa Schilf, Jute oder Kokos oder Kunststofffasern, beispielsweise aus Polypropylen, Polyamid, Polyester und Polyethylen, bestehen. Bei Geogittern handelt es sich in der Regel um Kunststoffe oder Verbundstoffe in Form von Gitter, Flechtwerk oder ähnlichem. Die erfindungsgemäße Verwendung des in Gegenwart von Wasser abbindenden Mineralschaums in Kombination mit einer Geotextilie oder einem Geogitter führt nach dem Abbinden und Aushärten zu einer Mineralschaumschicht, die dank der Armierung bzw. Bewehrung durch die Geotextilie bzw. das Geogitter, über besonders hohe Festigkeit und Stabilität verfügt. Eine solche Armierung ist insbesondere für die Abdeckung von Haldenflanken vorteilhaft.

Um die vorgenannte Armierung einer haldenabdeckenden Mineralschaumschicht zu erreichen, kann man in der Schicht des in Gegenwart von Wasser abbindenden Mineralschaums ein Geotextil oder ein Geogitter, vorsehen. Dies lässt sich bewerkstelligen, indem man das Geotextil oder Geogitter vor dem Aufbringen einer Schicht der Mineralschaum-Suspension auf die abzudeckenden Oberflächen der Halde legt oder auf dieser anbringt. Alternativ kann ein Geotextil oder Geogitter, insbesondere ein Geogitter, in die auf die Oberfläche der Halde aufgetragene Mineralschaum-Suspension eingedrückt werden. Gegebenenfalls kann man dann eine weitere Schicht des Mineralschaums aufbringen.

Die vorgenannte Armierung kann auch erzielt werden, indem man zwischen zwei Schichten des in Gegenwart von Wasser abbindenden Mineralschaums ein Geotextil oder ein Geogitter vorsieht, d.h. eine erste auf der Haldenoberfläche aufgebrachte Schicht der Mineralschaum-Suspension wird mit dem Geotextil oder Geogitter überdeckt, auf welches man wiederum eine weitere Schicht der Suspension aufbringt.

Die vorgenannten Verfahren zur kombinierten Verwendung von dem in Gegenwart von Wasser abbindenden Mineralschaum und einem Geotextil oder -gitter, führt nach dem Abbinden und Aushärten zu einer Haldenabdeckung aus gehärtetem Mineralschaum, der durch die Armierung über gesteigerte Festigkeit und Stabilität verfügt.

In einer weiteren Ausführungsform wird die nach dem erfindungsgemäßen Verfahren erhaltene ausgehärtete Mineralschaumschicht mechanisch bearbeitet, beispielweise durch Anschleifen oder Anfräsen, um eine porenoffene Oberfläche zu erhalten bzw. die Anzahl von offenen Poren auf der Oberfläche zu erhöhen und so die Wasseraufnahmefähigkeit der abdeckenden Mineralschaumschicht zu verbessern.

In einer weiteren Ausführungsform der Erfindung wird nach dem Abbinden des in Gegenwart von Wasser abbindenden Mineralschaums eine Begrünung der beschichteten Haldenoberfläche vorgenommen. Vorzugsweise wird dazu die ausgehärtete Mineralschaumschicht, gegebenenfalls nachdem sie wie zuvor beschrieben mechanisch bearbeitet wurde, mit Erdreich oder einem alternativen Material, das ebenfalls Pflanzenwachstum ermöglicht, überschichtet. Die so erhaltene neue Schicht wird anschließend durch Ausbringen von Saatgut bzw. durch Bepflanzen mit einer Pflanzenkultur, wie beispielsweise Gras, begrünt. Eine solche Kultivierung führt, auch aufgrund der hohen Wasseraufnahmefähigkeit der obersten bepflanzten Schicht, ebenfalls zu einer Stabilisierung der Halde, sowie zu einer Vergrößerung der Evaporation.

Die folgenden Abbildungen dienen der weiteren Erläuterung der Erfindung:

### Bezugszeichenliste

- 1: Haldenkörper
- 2: Haldengrund
- 3: erste Mineralschaum-Lage
- 3a: zuerst aufgetragenes Feld der ersten Lage
- 3b: danach aufgetragenes Feld der ersten Lage
- 4: weitere Mineralschaum-Lage
- 4a: zuerst aufgetragenes Feld der weiteren Lage
- 4b: danach aufgetragenes Feld der weiteren Lage
- 5: Überlappungsbereich

Abbildung 1 zeigt einen Querschnitt durch eine mit Mineralschaum abgedeckte Haldenflanke, die durch abschnittsweise, überlappende Auftragung horizontaler Streifen aus Mineralschaum erhalten wurde.

Abbildung 2 zeigt die Aufsicht auf eine Haldenabdeckung aus Mineralschaum, die durch abschnittsweise, überlappende Auftragung horizontaler Streifen aus Mineralschaum erhalten wurde, wobei die Streifen abschnittsweise in Form von überlappenden Feldern aus Mineralschaum aufgetragen wurden.

Die in den Abbildungen 1 und 2 gezeigte Abdeckung des Haldenkörpers erfolgte durch Auftragen einer ersten Lage (3) des Mineralschaums in Form eines horizontalen Streifens auf den Flankenbereich des Haldenkörpers (1) im Bereich des Haldengrunds (2), wobei die Schichtdicke der ersten Lage zumindest im oberen Bereich sich verjüngt. Anschließend wird oberhalb der ersten Lage (3) eine weitere Lage (4) des Mineralschaums in Form eines horizontalen Streifens auf den Flankenbereich des Haldenkörpers (1) so aufgebracht, dass sie mit der ersten Lage einen Überlappungsbereich (5) bildet. Diese Vorgehensweise kann wiederholt werden, bis die gewünschte Höhe der Abdeckung des Flankenbereichs erreicht ist. Die Streifen können abschnittsweise aufgetragen werden, wobei man zunächst ein erstes Feld (3a) und anschließend überlappend, ein oder mehrere horizontal angrenzende Felder (3b) aufbringt. Diese Vorgehensweise wird dann für die zweite und weitere Lagen wiederholt, wobei man die Felder (4a) bzw. (4b) erhält, die sowohl mit der Feldern (3a) und (3b) der ersten Lage wie auch miteinander überlappen.

Auch auf dem Haldentop kann eine Abdeckung entsprechend erfolgen.

## Patentansprüche

1. Verwendung von in Gegenwart von Wasser abbindendem Mineralschaum zur Abdeckung der Oberflächen von Halden, insbesondere von Rückstandssalzhalden des Bergbaus, in einer Gesamtschichtdicke von wenigstens 0,2 m, wobei der Mineralschaum eine Rohdichte im Bereich von 0,2 bis 2,0 kg/L aufweist.

2. Verwendung nach Anspruch 1, wobei der in Gegenwart von Wasser abbindende Mineralschaum zu einem offenporigen Mineralschaum abbindet.

3. Verwendung nach einem der vorhergehenden Ansprüche, wobei der in Gegenwart von Wasser abbindende Mineralschaum einen Porengehalt im Bereich von 10 bis 95 Vol.-% aufweist.

4. Verwendung nach einem der vorhergehenden Ansprüche, wobei der in Gegenwart von Wasser abbindende Mineralschaum ein Mineralschaum auf Basis eines Sorelzements ist und eine Rohdichte im Bereich von 0,2 bis 1,0 kg/L aufweist.

5. Verwendung nach einem der Ansprüche 1 bis 4, wobei der in Gegenwart von Wasser abbindende Mineralschaum ein Schaumbeton ist und eine Rohdichte im Bereich von 0,2 bis 1,0 kg/L aufweist.

6. Verwendung nach einem der vorhergehenden Ansprüche, wobei man den in Gegenwart von Wasser abbindenden Mineralschaum in Kombination mit einer Geotextilie oder einem Geogitter einsetzt.

7. Verwendung nach einem der vorhergehenden Ansprüche zur Abdeckung des Flankenbereichs von Halden, insbesondere des Flankenbereichs von Rückstandssalzhalden.

8. Verfahren zur Abdeckung der Oberflächen von Halden, insbesondere von Rückstandssalzhalden, umfassend die Bereitstellung eines in Gegenwart von Wasser abbindenden Mineralschaums nach einem der Ansprüche 1 bis 5, der eine Rohdichte im Bereich von 0,2 bis 2,0 kg/L aufweist, und Aufbringen wenigstens einer Schicht des in Gegenwart von Wasser abbindenden Mineralschaums in einer Gesamtschichtdicke von wenigstens 0,2 m auf die abzudeckenden Oberflächen der Halde.

9. Verfahren nach Anspruch 8, wobei man in der Schicht des in Gegenwart von Wasser abbindenden Mineralschaums oder zwischen zwei Schichten des in Gegenwart von Wasser abbindenden Mineralschaums eine Armierung, z.B. ein Geotextil oder ein Geogitter, vorsieht.

10. Verfahren nach Anspruch 8, wobei man vor dem Aufbringen der Schicht des in Gegenwart von Wasser abbindenden Mineralschaums eine Armierung, z.B. ein Geotextil oder ein Geogitter, auf der abzudeckenden Oberflächen der Halde vorsieht.

11. Verfahren nach einem der Ansprüche 8 bis 10, wobei man wenigstens eine erste Schicht eines in Gegenwart von Wasser abbindenden Mineralschaums auf die abzudeckenden Oberflächen der Halde und auf dieser wenigstens ersten Schicht wenigstens eine weitere Schicht eines in Gegenwart von Wasser abbindenden Mineralschaums aufbringt, wobei die wenigstens erste Schicht im abgebundenen Zustand ein geringes Wasseraufnahmevermögen aufweist und die weitere(n) Schicht(en) im abgebundenen Zustand ein höheres Wasseraufnahmevermögen aufweisen als die wenigstens eine erste Schicht.

12. Verfahren nach einem der Ansprüche 8 bis 11, wobei man den in Gegenwart von Wasser abbindenden Mineralschaum in einer Gesamtschichtdicke im Mittel von 0,2 bis 2,0 m auf die abzudeckenden Oberflächen der Halde aufbringt.

13. Verfahren nach einem der Ansprüche 8 bis 12, wobei man zumindest auf einen Teil des Flankenbereichs der Halde eine Schicht des in Gegenwart von Wasser abbindenden Mineralschaums aufbringt.

14. Verfahren nach einem der Ansprüche 8 bis 13, wobei man nach dem Abbinden des in Gegenwart von Wasser abbindenden Mineralschaums eine Begrünung der mit dem in Gegenwart von Wasser abbindenden Mineralschaum beschichteten Haldenoberfläche vorsieht.

15. Verfahren nach einem der Ansprüche 8 bis 14, wobei nach dem Abbinden des in Gegenwart von Wasser abbindenden Mineralschaums eine mechanische Bearbeitung erfolgt, um eine porenoffene Oberfläche zu erhalten.

## Claims

1. Use of mineral foam curable in the presence of water for covering the surfaces of heaps, in particular of salt spoil heaps from mining, in a total layer thickness of at least 0.2 m, wherein the mineral foam has a raw density in the range from 0.2 to 2.0 kg/L.

2. Use according to Claim 1, wherein the mineral foam curable in the presence of water cures to form an open-pored mineral foam.

3. Use according to either of the preceding claims, wherein the mineral foam curable in the presence of water has a pore content in the range from 10% to 95% by volume.

4. Use according to any of the preceding claims, wherein the mineral foam curable in the presence of water is a mineral foam based on a Sorel cement and has an apparent density in the range from 0.2 to 1.0 kg/L.

5. Use according to any of Claims 1 to 4, wherein the mineral foam curable in the presence of water is a foamed concrete and has an apparent density in the range from 0.2 to 1.0 kg/L.

6. Use according to any of the preceding claims, wherein the mineral foam curable in the presence of water is employed in conjunction with a geotextile or a geogrid.

7. Use according to any of the preceding claims for covering the flank region of heaps, in particular the flank region of salt spoil heaps.

8. Process for covering the surfaces of heaps, in particular of salt spoil heaps, comprising providing a mineral foam curable in the presence of water according to any of Claims 1 to 5 having an apparent density in the range from 0.2 to 2.0 kg/L and applying at least one layer of the mineral foam curable in the presence of water in a total layer thickness of at least 0.2 m onto the surfaces of the heap that are to be covered.

9. Process according to Claim 8, wherein a reinforcement, for example a geotextile or a geogrid, is provided in the layer of the mineral foam curable in the presence of water or between two layers of the mineral foam curable in the presence of water.

10. Process according to Claim 8, wherein before applying the layer of the mineral foam curable in the presence of water a reinforcement, for example a geotextile or a geogrid, is provided on the surfaces of the heap that are to be covered.

11. Process according to any of Claims 8 to 10, wherein at least a first layer of a mineral foam curable in the presence of water is applied to the surfaces of the heap that are to be covered and at least a further layer of a mineral foam curable in the presence of water is applied to this at least first layer, wherein the at least first layer in the cured state has a low water absorption capacity and the further layer(s) in the cured state have a higher water absorption capacity than the at least one first layer.

12. Process according to any of Claims 8 to 11, wherein the mineral foam curable in the presence of water is applied to the surfaces of the heap that are to be covered in a total layer thickness on average of 0.2 to 2.0 m.

13. Process according to any of Claims 8 to 12, wherein a layer of the mineral foam curable in the presence of water is applied at least on a portion of the flank region of the heap.

14. Process according to any of Claims 8 to 13, wherein after curing of the mineral foam curable in the presence of water a vegetative reclamation of the heap surface coated with the mineral foam curable in the presence of water is provided for.

15. Process according to any of Claims 8 to 14, wherein after curing of the mineral foam curable in the presence of water a mechanical treatment is carried out to obtain an open-pored surface.

## Revendications

1. Utilisation de mousse minérale durcissant en présence d'eau pour le recouvrement de surfaces de dépôts, en particulier de dépôts de sels résiduaires de l'exploitation minière, en une épaisseur de couche totale d'au moins 0,2 m, la mousse minérale présentant une masse volumique brute dans la plage de 0,2 à 2,0 kg/l.

2. Utilisation selon la revendication 1, la mousse minérale durcissant en présence d'eau durcissant en une mousse minérale à pores ouverts.

3. Utilisation selon l'une des revendications précédentes, la mousse minérale durcissant en présence d'eau présentant une teneur en pores dans la plage de 10 à 95% en volume.

4. Utilisation selon l'une des revendications précédentes, la mousse minérale durcissant en présence d'eau étant une mousse minérale à base d'un ciment Sorel et présentant une masse volumique brute dans la plage de 0,2 à 1,0 kg/l.

5. Utilisation selon l'une des revendications 1 à 4, la mousse minérale durcissant en présence d'eau étant un béton cellulaire et présentant une masse volumique brute dans la plage de 0,2 à 1,0 kg/l.

6. Utilisation selon l'une des revendications précédentes, la mousse minérale durcissant en présence d'eau étant mise en œuvre en combinaison avec un géotextile ou une géogrille.

7. Utilisation selon l'une des revendications précédentes pour le recouvrement de la zone de flanc de dépôts, en particulier de la zone de flanc de dépôts de sels résiduaires.

8. Procédé pour le recouvrement de surfaces de dépôts, en particulier de dépôts de sels résiduaires, comprenant la mise à disposition d'une mousse minérale durcissant en présence d'eau selon l'une des revendications 1 à 5, qui présente une masse volumique brute dans la plage de 0,2 à 2,0 kg/l, et l'application d'au moins une couche de la mousse minérale durcissant en présence d'eau en une épaisseur totale de couche d'au moins 0,2 m sur les surfaces à recouvrir du dépôt.

9. Procédé selon la revendication 8, une armature, par exemple un géotextile ou une géogrille, étant prévue dans la couche de la mousse minérale durcissant en présence d'eau ou entre deux couches de la mousse minérale durcissant en présence d'eau.

10. Procédé selon la revendication 8, une armature, par exemple un géotextile ou une géogrille, étant prévue sur les surfaces à recouvrir du dépôt avant l'application de la couche de la mousse minérale durcissant en présence d'eau.

11. Procédé selon l'une des revendications 8 à 10, au moins une première couche d'une mousse minérale durcissant en présence d'eau étant appliquée sur les surfaces à recouvrir du dépôt et au moins une autre couche d'une mousse minérale durcissant en présence d'eau étant appliquée sur cette au moins une première couche, ladite au moins une première couche présentant, à l'état durci, un faible pouvoir d'absorption d'eau et la/les autre(s) couche(s) présentant, à l'état durci, un pouvoir d'absorption d'eau plus élevé que celui de ladite au moins une première couche.

12. Procédé selon l'une des revendications 8 à 11, la mousse minérale durcissant en présence d'eau étant appliquée en une épaisseur totale de couche en moyenne de 0,2 à 2,0 m sur les surfaces à recouvrir du dépôt.

13. Procédé selon l'une des revendications 8 à 12, une couche de la mousse minérale durcissant en présence d'eau étant appliquée au moins sur une partie de la zone de flanc du dépôt.

14. Procédé selon l'une des revendications 8 à 13, une végétalisation de la surface du dépôt revêtue par la mousse minérale durcissant en présence d'eau étant prévue après le durcissement de la mousse minérale durcissant en présence d'eau.

15. Procédé selon l'une des revendications 8 à 14, un traitement mécanique pour obtenir une surface à pores ouverts ayant lieu après le durcissement de la mousse minérale durcissant en présence d'eau.
